# EUROPEAN PATENT APPLICATION

(11) **EP 4 088 615 A1**
(43) Date of publication of application: **16.11.2022**
(21) Application number: 20911633.4
(22) Date of filing: 13.01.2020
(51) Int. Cl.: A45D 34/04, B05B 11/00

(54) **ECO-PUMP-TYPE COSMETIC CONTAINER**

(30) Priority: 09.01.2020 KR 20200003298
(71) Applicant: MINJIN Co., Ltd., Gyeonggi-do 18630 (KR); Ki, Keun Seo, Hwaseong-si, Gyeonggi-do 18482 (KR); Ki, Min Ho, Suwon-si, Gyeonggi-do 16704 (KR)
(72) Inventor: KI, Keun Seo, Hwaseong-si Gyeonggi-do 18482 (KR); KI, Min Ho, Suwon-si Gyeonggi-do 16704 (KR)
(74) Representative: ABG Intellectual Property Law, S.L.
(86) International application number: PCT/KR2020/000586
(87) International publication number: WO 2021/141172

(57) **Abstract**

The present invention relates to a cosmetic container using an eco pump, and the eco pump effectively controls pressure acting on a space between a container body and a container lid, thereby preventing liquid leakage from the space between the container body and the container lid to the container lid. The cosmetic container using the eco pump includes a container body, a cover, a connection tube and a check valve which effectively block and release liquid contents discharged from the container body, an eco pump made of an elastomer material, and first to fourth cylinder members and a container lid discharging the liquid contents to the outside via a discharge path of a lid or blocking the liquid contents from the outside.

## Description

### [Technical Field]

The present invention relates to a cosmetic container using an eco pump.

### [Background Art]

Liquid cosmetics are generally stored in storage containers such as pump containers, tube containers, and dropper containers. Among them, the pump container has an advantage in that the liquid cosmetics stored in the pump container can be discharged by a simple operation of a user.

In the conventional pump container, when pressure is applied to a container lid, contents stored in a container body are discharged. Such a pump container can discharge the contents as much as the user wants according to the pressure applied to the lid of the container, and the contents are precisely discharged in the user's desired direction.

However, the conventional pump container is often made of a synthetic resin material. There is a growing demand for recycling of synthetic resins for environmental protection and waste reduction, and in the case of a conventional pump container, a spring or the like is applied to release the pump after pressurization. The pump container body and the lid are generally made of the synthetic resin material, but there is a problem in that a spring made of metal is included in the lid, which becomes an obstacle to recycling of the synthetic resin material.

### [Disclosure]

### [Technical Problem]

A technical problem to be solved by the present invention is to provide a cosmetic container that is easy to recycle and eco-friendly by reducing parts of a cosmetic container and removing a metal material such as a spring among the parts.

Various problems to be solved by the present invention are not limited to the aforementioned problems, and other problems, which are not mentioned above, will be apparent to a person having ordinary skill in the art from the following description.

### [Technical Solution]

In order to solve the problem, the present invention provides a cosmetic container using an eco pump, which includes:
a container body storing liquid contents, having an inlet part for forming an opening at an upper side, and having a pipe interposed inside in a longitudinal direction;
a cover including a body in which the inlet part is inserted and coupled into a lower part, and having a pipe shape having a first inner diameter, a second inner diameter, and a third inner diameter from the bottom to the upper side, and a projected portion which is projected inside between the second inner diameter and the third inner diameter;
a connection tube including a first lower tube inserted into the inlet part and into which the pipe is coupled to the inside, a first upper tube extending to the upper side of the lower tube, an insertion tube extending from the top of the first upper tube, and the outflow hole in which a tube diameter decreases to the inside of the top of the first lower tube and which is formed to penetrate the first upper tube from the first lower tube;
a check valve disposed on the bottom of the first upper tube to seal or release the outflow hole;
a first cylinder member including a pipe-shaped inflow tube, a first base blocking the bottom of the inflow tube, and one or more penetration holes formed by penetrating a lower side wall of the inflow tube;
a second cylinder member including a first outer tube having a corresponding outer diameter to be inserted and coupled into the connection tube, a first inner tube having a corresponding inner diameter so that the inflow tube is inserted into the inside and movable up and down, and a first connection tube connecting the first inner tube and the first outer tube to each other;
a fourth cylinder member including a second lower tube in which the inflow tube is inserted at the lower side, a first inner tube insertion portion having a corresponding inner diameter so that the upper first inner tube of the second cylinder member is inserted into the bottom of the second lower tube, and a second upper tube extending to the upper side with a smaller tube diameter than the second lower tube at the upper side of the second lower tube;
a third cylinder member including a second outer tube having a corresponding outer diameter and a corresponding height to be inserted and coupled into the second inner diameter of the cover, a second inner tube having a corresponding inner diameter to hold the second lower tube of the fourth cylinder member, an intermediate tube disposed between the second outer tube and the second inner tube, a second connection portion connecting the bottom of the second outer tube and a middle of the intermediate tube, and a third connection portion connecting the top of the intermediate tube and the second inner tube;
an eco pump including a pipe-shaped deformable portion, a second base extending to the outside from the bottom of the deformable portion and seated on the third connection portion, a stepped portion insertion hole which is projected downward from the outer end portion of the second base and inserted into a third groove portion of the third cylinder member, a bending portion bent to the inside from the top of the deformable portion, and a second inflow tube extending to the upper side from the inner end portion of the bending portion inserted with the second upper tube, and made of an elastic material and deformed downward when being pressed from the top; and
a container lid including a third outer tube inserted into/withdrawn from the third inner diameter of the cover, an upper cap covering the third outer tube, a third inner tube formed to extend downward to have a first inner diameter portion having a corresponding size to apply for hold and press from the top the second inflow tube of the eco pump at a center of the bottom surface of the upper cap, a second inner diameter portion having a corresponding size so that the second upper tube of the fourth cylinder member may be closely inserted, and a third inner diameter portion having a corresponding size to hold the second inflow tube of the eco pump and press the top, and a discharge path formed between a lower surface extending from on one side of the top of the third inner tube and the upper cap.

The deformable portion includes
a deformable groove portion and a deformable projection portion are alternately disposed on a circumference of the bottom of the bending portion, and
a support portion extending downward from the bottoms of the deformable groove portion and the deformable projection portion, and
the deformable groove portion is formed in an inverted triangular shape and the deformable projection portion is formed in a triangular shape.

Atop vertex of the deformable projection portion extends up to an outer surface of the second outflow tube.

The support portion has an inclination portion in which an inner circumference becomes thicker downward.

In the deformable portion,
the bending portion and the deformable groove portion have the same thickness as t1, and
a thickness t2 of the deformable projection portion is at most twice larger than the t1.

In the first cylinder member,
the first inflow tube is inserted into the first inner tube of the second cylinder member and the penetration hole deviates from the first inner tube and is exposed to the inside of the first upper tube when the first inner tube is sealed and the first inflow tube moves downward.

### [Advantageous Effects]

A cosmetic container using an eco pump and a cylinder provided in a pump container according to the present invention effectively control pressure acting on a space between a container body and a container lid, thereby preventing liquid leakage from the space between the container body and the container lid to the container lid.

Further, the cosmetic container using the eco pump and the cylinder provided in the pump container according to the present invention have an advantage in that a separate driving device or spring applied to a general reciprocating pump is not required.

In addition, the eco pump according to the present invention has an advantage in that a storage solution can be discharged from the cosmetic container in proportion to the user's pressurization degree.

Embodiments of the technical idea of the present invention may provide various effects not specifically mentioned.

### [Description of Drawings]

FIG. 1 is a perspective view illustrating a lid part of a cosmetic container using an eco pump according to the present invention.
FIG. 2 is a view expressing a state in which disassembled components of FIG. 1 are sequentially arranged.
FIG. 3 is a perspective view illustrating a state in which a first cylinder member of FIG. 2 is vertically cut.
FIG. 4 is a perspective view illustrating a state in which a second cylinder member of FIG. 2 is vertically cut.
FIG. 5 is a perspective view illustrating a state in which a third cylinder member of FIG. 2 is vertically cut.
FIG. 6 is a perspective view illustrating a state in which an eco pump of FIG. 2 is vertically cut.
FIG. 7 is a cross-sectional view illustrating an initial state of a cosmetic container adopting an eco pump according to the present invention.
FIG. 8 is a cross-sectional view illustrating a pressing state of the cosmetic container adopting an eco pump of FIG. 7.
FIG. 9 is a cross-sectional view illustrating a recovery state of the cosmetic container adopting an eco pump of FIG. 8.

### [Best Mode]

Advantages and features of the present invention, and methods for accomplishing the same will be more clearly understood from embodiments described in detail below with reference to the accompanying drawings. However, the present invention is not limited to embodiments described herein and may be embodied in other forms. Rather, the embodiments introduced herein are provided so that the disclosed contents may be thorough and complete, and the idea of the present invention may be sufficiently conveyed to those skilled in the art. Further, in the drawings, the thicknesses of layers and regions are exaggerated for clarity.

Terms including as first, second, and the like are used for describing various components, but the components should not be limited by the terms. The terms are used only to discriminate one element from another element. For example, a first component may be referred to as a second component, and the second component may be referred to as the first component without departing from the scope of the present invention.

Terms such as top, bottom, upper surface, lower surface, upper part and lower part are used to distinguish relative positions of components. For example, when naming an upper side of the drawing as an upper part and a lower side of the drawing as a lower part for convenience, the upper part may be called the lower part and the lower part may be called the upper part without departing from the scope of the present invention.

Terms used in the present application are used only to describe specific exemplary embodiments, and are not intended to limit the present invention. A singular form includes a plural form if there is no clearly opposite meaning in the context. In the present application, it should be understood that the term "include" or "have"indicates that a feature, a number, a step, an operation, a component, a part or the combination thereof described in the specification is present, but does not exclude a possibility of presence or addition of one or more other features, numbers, steps, operations, components, parts or combinations thereof, in advance.

If it is not contrarily defined, all terms used herein including technological or scientific terms have the same meanings as those generally understood by a person with ordinary skill in the art. Terms which are defined in a generally used dictionary should be interpreted to have the same meaning as the meaning in the context of the related art, and are not interpreted as an ideal meaning or excessively formal meanings unless clearly defined in the present application.

Hereinafter, preferred embodiments of a cosmetic container using an eco pump and a cylinder provided in a pump container according to the present invention will be described in detail with reference to the accompanying drawings.

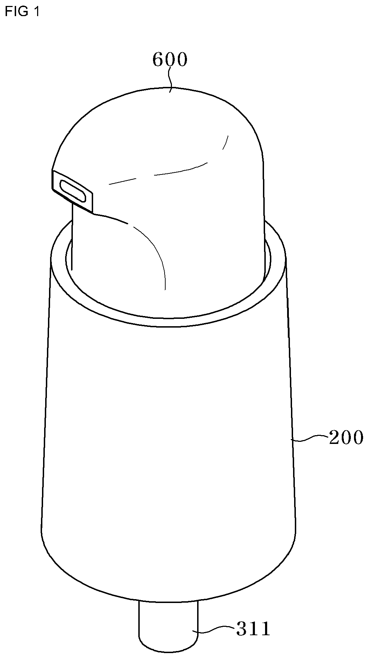

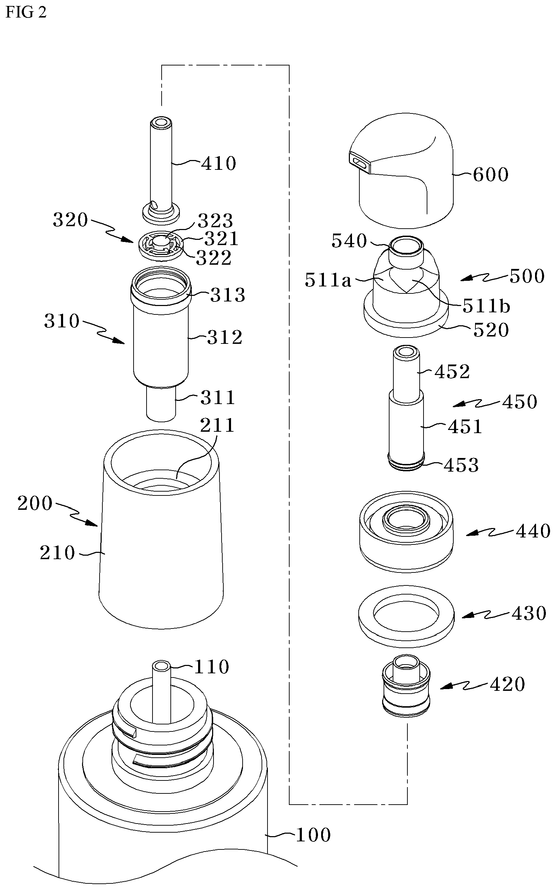

FIG. 1 is a view illustrating a lid part coupled to an inlet part of a cosmetic container adopting an eco pump according to the present invention. FIG. 2 is a view illustrating a state in which disassembled components of the cosmetic container adopting an eco pump are sequentially arranged according to the present invention.

Referring to FIGS. 1 and 2, the cosmetic container adopting an eco pump according to the present invention includes a container body 100, a cover 200, a connection tube 310, a check valve 320, a first cylinder member 410, a second cylinder member 420, a third cylinder member 440, a fourth cylinder member 450, an eco pump 500, and a container lid 600 in order to effectively control pressure acting on a space between the container body 100 and a container lid 800.

In the container body 100, a storage space capable of storing liquid contents may be provided, an inlet part 120 for forming an opening at an upper side may be installed, and a pipe 110 may be interposed inside in a longitudinal direction.

A lower part of the cover 200 is coupled to the inlet part 120 of the container body 100 to partially seal the container body 100. The cover 200 includes a pipe-shaped body 210 in which the inlet part 120 of the container body 100 is inserted and coupled into the lower part, the lid 600 is inserted into the upper part, and the connection tube 310, the first cylinder member 410, the second cylinder member 420, the third cylinder member 440, the fourth cylinder member 450, and the eco pump 500 are disposed therebetween. The pipe-shaped body 210 has a first inner diameter portion 210a, a second inner diameter portion 210b, and a third inner diameter portion 210c from the bottom to the upper side. The first inner diameter portion 210a is set to a size corresponding to an outer diameter of the inlet part 120, and a screw thread 213 corresponding to a screw thread of the inlet part 120 to be screwable with the screw thread of the inlet part 120 at a position of the first inner diameter portion 210a. The second inner diameter portion 210b is formed by an inner diameter having a corresponding size so as for the third cylinder member 440 to be coupled to the inside, and a protrusion is formed on a bottom circumference of the second inner diameter portion 210b to hold the third cylinder member 440. A projected portion 211 which is projected inside is formed between the third inner diameter portion 210c and the second inner diameter portion 210b to support a base 520 of the eco pump 500 to be described later. The third inner diameter portion 210c is formed by an inner diameter having a corresponding size so as for an outer tube 620 of the lid 600 to be inserted and withdrawn.

The connection tube 310 includes a first lower tube 311 inserted into the inlet part 120 of the container body 100 and into which the pipe 110 is coupled, a first upper tube 312 extending from the first lower tube to the upper side, and an insertion tube 313 inserted and coupled into the third cylinder member 440 to be described later. The insertion tube 313 protrudes outward from the first upper tube 312 with a corresponding outer diameter to be inserted and coupled into a fourth groove portion 444a of the third cylinder member 440. A second suspending projection 314 protrudes on an inner peripheral surface so that a first check valve 320 does not rise to the inside of the first upper tube 312 in the lower part of the inner surface of the first upper tube 312. An outflow hole 314 through which the liquid contents flow out is formed between the first lower tube 311 and the first upper tube 312. A tube diameter decreases and the outflow hole 315 is thus formed at the inside of the top of the first lower tube 311, and the first check valve 320 is coupled to the upper side of the outflow hole 315 having the decreased tube diameter.

The check valve 320 includes a blocking portion 323 which protrudes with a shape and a size corresponding to an end portion of the outflow hole 315 so as to seal a ring-shaped body 321 having a diameter to be inserted into the first upper tube 312 and be movable and the outflow hole 315, and a radial radiation pin 322 connecting the blocking portion 323 and the body 321. The check valve 320 is disposed to be inserted into the first upper tube 312 to seal or open the outflow hole 315. When external force is applied to the eco pump 500, the blocking portion 323 is in close contact with the outflow hole 315 by the pressure and when the external force applied to the eco pump 500 is relaxed, the pressure decreases and the blocking portion 323 is thus separated from the inside of the outflow hole 315. A plurality of radiation pins 322 are located radially along a circumferential length of the check valve 320 and a gap is formed therebetween. When the check valve 320 is released from the outflow hole 315, the liquid contents move toward the first upper tube 312 through the gap between the radiation pins 322. When the liquid contents are pumped to the first upper tube 312 in which the check valve 320 is inserted into the bottom, the liquid contents are stored and the size of the first upper tube 312 may be set according to a maximum pumping amount at one time.

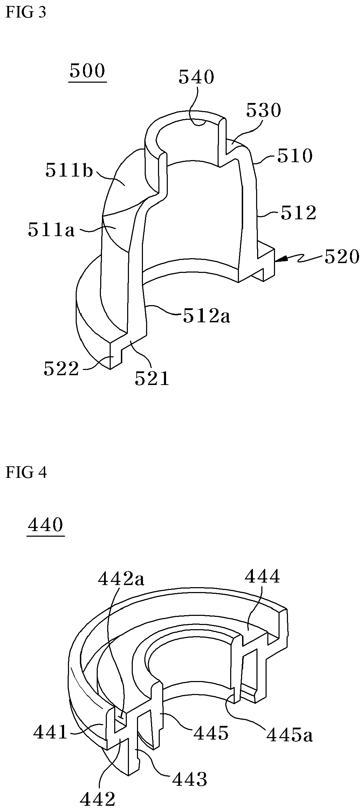

FIG. 3 is a cross-sectional perspective view in which the first cylinder member 410 is vertically cut according to an embodiment of the present invention. As illustrated, the first cylinder member 410 includes a pipe-shaped inflow tube 412 moving the contents to a discharge path at the container lid side, a first base blocking the bottom of the inflow tube 412 on the bottom of the inflow tube 412, and one or more penetration holes 411 formed to penetrate the lower part of the inflow tube 411 to make the liquid contents to flow into the inside of the inflow tube 412 at the lower part of the inflow tube 412. The first base 413 is preferably formed to have a larger than a tube diameter than the inflow tube 412. It is preferable that the first base 413 is formed to be larger than an outer diameter of a first inner tube 423 of the second cylinder member 420 to be described later, and smaller than an inner diameter of a first outer tube 421.

FIG. 4 is a cross-sectional view in which the second cylinder member 420 is vertically cut according to an embodiment of the present invention. As illustrated, the second cylinder member 420 includes first outer tubes 421 and 422 corresponding to the inner diameter of the first upper tube 312 of the connection tube 310, first inner tubes 423 and 424 corresponding to the outer diameter of the inflow tube 412 of the first cylinder member 410, and a first connection portion 425 connecting the first outer tubes 421 and 422 and the first inner tubes 423 and 424 to each other. A first groove portion 425a is formed by the lower first outer tube 421, the connection tube 425, and the lower first inner tube 423, and a second groove portion 425b is formed by the upper first outer tube 422, the connection tube 425, and the upper first inner tube 424. It is preferable that the lower first outer tube 421 is formed to be longer than the lower first inner tube 423, and the upper first inner tube 424 is formed long along the tube diameter of the first cylinder member 410 so as to guide the first cylinder member 410. The outer tube of the second cylinder member 420 has an outer diameter corresponding to the inner diameter of the first upper tube 312 to be fitted and coupled to the first upper tube 312 of the connection tube 310. The inflow tube 412 of the first cylinder member 410 is inserted into the lower first inner tube 423 of the second cylinder member 420, and the first base 413 is suspended by the lower first inner tube 423 not to ascend any longer. The inflow tube 412 moves up and down along the first inner tubes 423 and 424. The inflow tube 412 descends and moves from the upper first inner tube 424 which is in close contact with the penetration hole 411 to the lower first inner tube 423 and when the penetration hole 411 deviates from the inner tubes 423 and 424, the liquid contents flow into the inside of the inflow tube 412 having low pressure inside the first upper tube 312 through the penetration hole 411.

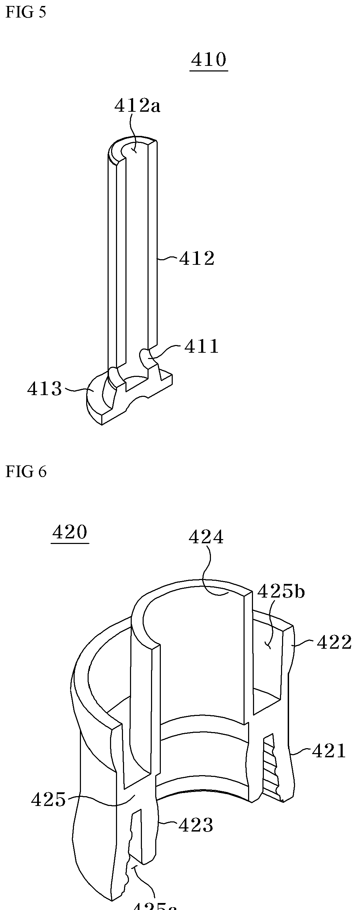

FIG. 5 is a perspective view in which the third cylinder member 440 is vertically cut according to an embodiment of the present invention. As illustrated, the third cylinder member 440 includes a second outer tube 441 having an outer diameter and a height corresponding to the inner diameter of the second inner diameter portion 210b of the cover 200, a second inner tube 445 having a corresponding inner diameter so as to hold the outer diameter of the first lower tube 451 of the fourth cylinder member 450, an intermediate tube 443 disposed between the second outer tube 441 and the second inner tube 445, a second connection portion 442connecting the bottom of the second outer tube 441 and a middle of the intermediate tube 443, and a third connection portion 444 connecting the top of the intermediate tube 443 and the second inner tube 445. A third groove portion 442a is formed by the second outer tube 441, the intermediate tube 443, and the second connection portion 442, and a fourth groove portion 444a is formed by the intermediate tube 443, the second inner tube 445, and the third connection portion 444. A second base 521 of the eco pump 500 is inserted and coupled into the third groove portion 442a, and the insertion tube 313 of the connection tube 310 is inserted and coupled into the fourth groove portion 444a. A groove 445a is formed on the inner circumference of the bottom of the second inner tube 445 and a protrusion formed at an outside of the bottom of the second lower tube 451 of the fourth cylinder member 450 is suspended to the groove 445a to fix the fourth cylinder member 450.

A packing 430 is fitted and coupled so as to be in contact with a bottom surface of the second connection portion 442 and an outer wall of the intermediate tube 443 on the bottom of the second outer tube of the third cylinder member 440 to prevent a solution from leaking after coupling the lid part to the container. The packing 430 is preferably made of an elastic material such as donut-shaped disk-shaped rubber.

The fourth cylinder member 450 includes a second lower tube 451 having an outer diameter corresponding to the inner diameter of the second inner tube 445 of the third cylinder member 440, a second upper tube 452 extending from the top of the second lower tube 451 to the upper side with a corresponding outer diameter so as to be inserted into the third inner tube 640 of the lid 600, and a suspending portion 453 which protrudes on a lower circumference of the bottom so as to be suspended to the groove 445a of the second inner tube 445 of the third cylinder member 440. The second lower tube 451 has a corresponding inner diameter so that the inflow tube 412 of the first cylinder member 410 is closely inserted and movable, and a first inner tube insertion portion is formed at the upper side of the second cylinder member 420, which has a corresponding inner diameter so that the first inner tube 424 may be inserted into the first inner tube insertion portion.

FIG. 6 is a perspective view illustrating a state in which the eco pump of FIG. 2 is vertically cut. The eco pump 500 is preferably made of an elastic material such as a rubber. The eco pump 500 includes a deformable portion 510 deformed by pressurization of the container lid 600 to be described later, a base 521 connected from the bottom of the deformable portion 510, and a stepped portion insertion hole 522 which protrudes downward at an end portion of the base 521 and is inserted into the upper third groove portion 442a of the third cylinder member 440. The eco pump 500 includes a bending portion 530 formed to be bent inward on the top of the deformable portion 510 so as to be closely coupled to the second upper tube 452 of the fourth cylinder member 450. The eco pump 500 includes a second inflow tuber 540 extending to the upper side from the inner end portion of the bending portion 530, inserted into the inside of the second upper tube 452 and inserted into the bottom of the third inner tube 640 of the lid 600. The deformable portion 510 includes a first inclination portion 512 and a second inclination portion 512a for reinforcing a thickness of an inner lower portion. The deformable portion 510 has a cylindrical outline, and is deformed downward or restored to an original state according to a pressurization degree of the third inner tube 640 with respect to the bending portion 530. A plurality of deformable groove portions 511b and deformable projection portions 511a are alternately formed on the outer surface of the deformable portion 510 connected from the bending portion 530. The deformable groove portion 511b is formed in an inverted triangular shape, and the deformable projection portion 511a is formed in a triangular shape. A top vertex of the deformable projection portion 511a may extend up to the end portion of the bending portion 530. The thickness of the deformable portion 510 may be equal to the thickness of the deformable groove portion of the bending portion 530, the deformable projection portion 511a may be formed to have a thickness at most twice larger than the thickness of the deformable groove portion 511b, and a support portion with the second inclination portion 512a may be formed to have a thickness at most three times larger than the thickness of the deformable groove portion 511b. The thickness of the deformable portion 510 is gradually increased and when the bending portion 530 is pressed by the container lid, the bending portion 530 is easily deformed downward and when pressing force disappears, the bending portion 530 is easily restored and a deformation amount is in proportion to a degree of the pressing force and a pumping amount of suctioning the stored solution is also in proportion to the deformation amount. In particular, since the top vertex of a triangle of the deformable projection portion extends up to the end portion of the bending portion 530, the bending portion 530 may maintain restoration force even though the bending portion 530 is used for a long time. Further, the pressing force is transmitted obliquely to a vertex at the lower part of the deformable groove portion having the inverted triangular shape to guide external force to be gradually transmitted from the upper part to the lower part of the eco pump 500.

The container lid 600 includes a third outer tube 620 inserted into/withdrawn from the third inner diameter portion 210c of the cover 200, an upper cap 610 covering the third outer tube 620, a third inner tube 640 formed to extend downward to have a first inner diameter portion 641 having a corresponding size to apply for hold and press from the top the second inflow tube 540 of the eco pump 500 at a center of the bottom surface of the upper cap 610, a second inner diameter portion 642 having a corresponding size so that the second upper tube 452 of the fourth cylinder member 450 may be closely inserted, and a third inner diameter portion 643 having a corresponding size to hold the second inflow tube 540 of the eco pump 500 and press the top, and a discharge path 630 formed between a lower surface extending from on one side of the top of the third inner tube 640 and the upper cap 610. Since the third inner tube 640 is formed to have three inner diameters and two stepped portions are thus formed, when the top of the second upper tube 452 of the fourth cylinder member 450 and the top of the second inflow tube 540 of the eco pump 500 suspended to the stepped portions press the upper cap 610 of the container lid 600, the container lid 600 is suspended to receive force applied downward jointly. Therefore, when the container lid 600 is pressed, the fourth cylinder member 450 and the eco pump 500 moves downward jointly with the lid 600. When the third inner tube 640 presses down the eco pump 500 to deform the eco pump 500 or the eco pump 500 is restored and ascends, the third outer tube 620 receives pressure of ascending jointly. The third outer tube 620 is inserted into the upper inner part of the cover 200 through a top opening of the cover 200. A height of the third outer tube 620 and the height of the projected portion 211 are set so that the third outer tube 620 is inserted into up to the projected portion 211.

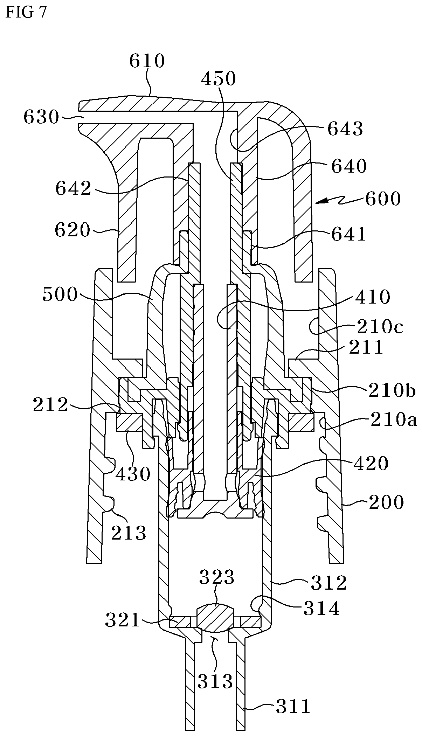

Coupling of the components of the cosmetic container according to the embodiment of the present invention configured as above will be described with reference to FIG. 7 illustrating an initial state of the cosmetic container.

The inflow tube 412 of the first cylinder member 410 is inserted into the first inner tubes 423 and 424 of the second cylinder member 420 and the penetration hole 411 is blocked by the first inner tubes 423 and 424. The inflow tube 412 of the first cylinder member 410 is inserted into the inside of the second lower tube 452 of the fourth cylinder member 450 while being coupled to the second cylinder member 420. The upper first inner tube 423 of the second cylinder member is inserted into the first inner diameter portion of the fourth cylinder member 450 while being coupled to the inflow tube 412. The fourth cylinder member 450 into which the first cylinder member and the second cylinder member are inserted is inserted into the second inner tube 445 of the third cylinder member 440. The fourth cylinder member 450 into which the first and second cylinder members 410 and 420 are inserted is coupled by penetrating a center of a body of the eco pump 500 so that the upper tube 452 of the fourth cylinder member 450 is inserted into the second inflow tube 540 of the eco pump 500. The second base 521 of the eco pump 500 is seated on the third connection portion 444 of the third cylinder member 440 and the stepped portion insertion hole 522 is inserted and coupled into the third groove portion 442a. The first, second, third, and fourth cylinder members 410, 420, 440, and 450 coupled to the eco pump 500 are inserted into the upper side from the lower side of the pipe-shaped cover 200 and coupled to be seated on the second inner diameter portion 210b of the cover 200 so that the base 521 of the eco pump 500 and the second outer tube 441 of the third cylinder member 440 are suspended on the projected portion 211 of the cover 200. Abase side of the first cylinder member 410 to which the second cylinder member 420 is coupled is inserted and coupled into the lower side from the top of the connection tube 310. The insertion tube 313 of the connection tube 310 is inserted into the fourth groove portion 444a of the third cylinder member 440. The packing 430 is fitted and coupled so as to be in contact with the bottom surface of the second connection portion 442 and the outer wall of the intermediate tube 443 on the bottom of the second outer tube of the third cylinder member 440. The second upper tube 452 and the second inflow tube 540 are fitted and coupled to the lid 600 to be inserted and coupled into the upper side from the bottom of the third inner tube 640.

End portions of the third inner tube 640, the fourth cylinder member 450, the eco pump 500, the third cylinder member 440, the second cylinder member 420, the first cylinder member 410, and the connection tube 310 are inserted and coupled into each other to discharge the liquid contents only through the discharge path at a central region.

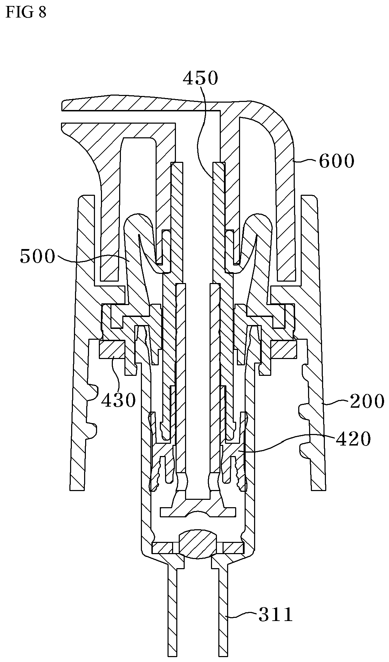

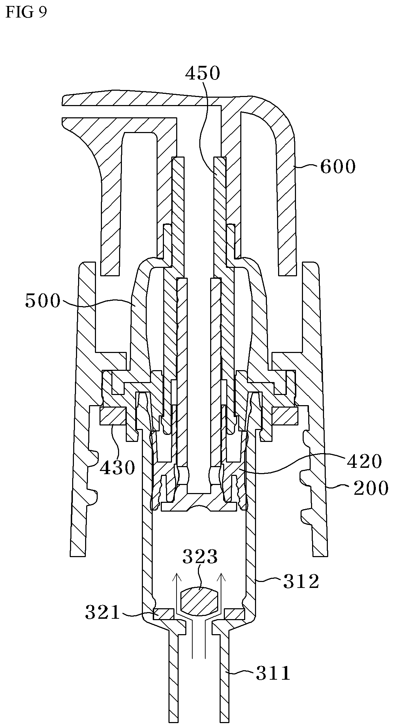

FIG. 8 is a cross-sectional view illustrating a pressing state of the cosmetic container adopting an eco pump of FIG. 7. FIG. 9 is a cross-sectional view illustrating a recovery state of the cosmetic container adopting an eco pump of FIG. 8. An operation of the cosmetic container adopting the eco pump according to the embodiment of the present invention will be described with reference to FIGS. 8 and 9.

When the container lid 600 is pressed downward in a first operation state, the top of the fourth cylinder member 450 and the top of the eco pump are pressed by the stepped portion formed by a triple inner diameter in which the inner diameter increases toward the lower part from the upper part of the third inner tube 640, and the bottom of the third inner tube 640 presses the bending portion 530 which is a shoulder of the eco pump 500 to deform the deformable portion 610 as illustrated in FIG. 8. Further, the first cylinder member 410 inserted and coupled into the fourth cylinder member 450 is moved downward jointly with the fourth cylinder member 450. In this case, the fitted and coupled second and third cylinder members 420 and 440 and connection tube 310 are not moved. Since the second cylinder member 420 is fixed and only the inserted first cylinder member 410 is moved downward, the penetration hole 411 of the first cylinder member 410 is exposed to the inside of the upper tube of the connection tube 310, and air inside the eco pump 500 and the first to fourth cylinder members 410, 420, 440, and 450 are discharged through the penetration hole 411. When the deformable portion 510 of the eco pump 500 ascends by the restoration force of the eco pump 500 made of the elastic material by removing the pressing force therefrom, the force applied to the fourth cylinder member 450 disappears, and at the same time, the first cylinder member 410 coupled to the fourth cylinder member 450 ascends to block the penetration hole 411 by the inner tubes 423 and 424 of the first cylinder member 410. Therefore, since the pressure inside the upper tube 312 of the connection tube 310 decreases, when the check valve 320 coupled to block the outflow hole 315 of the connection tube 310 is released from the outflow hole 315, the liquid contents are moved toward the first upper tube 312 through the gap between the radiation pins 322 as illustrated in FIG. 9. When the liquid contents are pumped to the first upper tube 312 in which the check valve 320 is inserted into the bottom, the liquid contents are stored and the size of the first upper tube 312 may be set according to a maximum pumping amount at one time.

When the container lid 600 is pressed downward while the liquid contents are stored in the first upper tube 312, the top of the fourth cylinder member 450 and the top of the eco pump are pressed by the stepped portion formed by a triple inner diameter in which the inner diameter increases toward the lower part from the upper part of the third inner tube 640, and the bottom of the third inner tube 640 presses the bending portion 530 which is a shoulder of the eco pump 500 to deform the deformable portion 610 as illustrated in FIG. 8. Further, the first cylinder member 410 inserted and coupled into the fourth cylinder member 450 is moved downward jointly with the fourth cylinder member 450 and the penetration hole 411 of the first cylinder member 410 is exposed to the inside of the first upper tube 312. The liquid contents are moved to the inside of the first inflow tube 412 through the penetration hole 411, and the liquid contents are exposed to the outside via the discharge path 630 through the upper tube 452 of the fourth cylinder member 450 into which the first inflow tube 412 is inserted.

In the cosmetic container using the eco pump according to the present invention, when the external force is applied to the container lid 600 after a second operation state, the liquid contents are discharged to the discharge path 530, and the liquid contents may be prevented from flowing down to the container body 100.

The eco pump according to the present invention has an advantage in that a storage solution can be discharged from the cosmetic container in proportion to the user's pressurization degree.

Hereinabove, the preferred embodiments of the present invention have been described with the accompanying drawings, but it can be understood by those skilled in the art that the present invention can be executed in other detailed forms without changing the technical spirit or requisite features of the present invention. Therefore, it should be appreciated that the aforementioned embodiments are illustrative in all aspects.

## Claims

1. A cosmetic container using an eco pump, comprising:
a container body storing liquid contents, having an inlet part for forming an opening at an upper side, and having a pipe interposed inside in a longitudinal direction;
a cover including a body in which the inlet part is inserted and coupled into a lower part, and having a pipe shape having a first inner diameter, a second inner diameter, and a third inner diameter from the bottom to the upper side, and a projected portion which is projected inside between the second inner diameter and the third inner diameter;
a connection tube including a first lower tube inserted into the inlet part and into which the pipe is coupled to the inside, a first upper tube extending to the upper side of the lower tube, an insertion tube extending from the top of the first upper tube, and the outflow hole in which a tube diameter decreases to the inside of the top of the first lower tube and which is formed to penetrate the first upper tube from the first lower tube;
a check valve disposed on the bottom of the first upper tube to seal or release the outflow hole;
a first cylinder member including a pipe-shaped inflow tube, a first base blocking the bottom of the inflow tube, and one or more penetration holes formed by penetrating a lower side wall of the inflow tube;
a second cylinder member including a first outer tube having a corresponding outer diameter to be inserted and coupled into the connection tube, a first inner tube having a corresponding inner diameter so that the inflow tube is inserted into the inside and movable up and down, and a first connection tube connecting the first inner tube and the first outer tube to each other;
a fourth cylinder member including a second lower tube in which the inflow tube is inserted at the lower side, a first inner tube insertion portion having a corresponding inner diameter so that the upper first inner tube of the second cylinder member is inserted into the bottom of the second lower tube, and a second upper tube extending to the upper side with a smaller tube diameter than the second lower tube at the upper side of the second lower tube;
a third cylinder member including a second outer tube having a corresponding outer diameter and a corresponding height to be inserted and coupled into the second inner diameter of the cover, a second inner tube having a corresponding inner diameter to hold the second lower tube of the fourth cylinder member, an intermediate tube disposed between the second outer tube and the second inner tube, a second connection portion connecting the bottom of the second outer tube and a middle of the intermediate tube, and a third connection portion connecting the top of the intermediate tube and the second inner tube;
an eco pump including a pipe-shaped deformable portion, a second base extending to the outside from the bottom of the deformable portion and seated on the third connection portion, a stepped portion insertion hole which is projected downward from the outer end portion of the second base and inserted into a third groove portion of the third cylinder member, a bending portion bent to the inside from the top of the deformable portion, and a second inflow tube extending to the upper side from the inner end portion of the bending portion inserted with the second upper tube, and made of an elastic material and deformed downward when being pressed from the top; and
a container lid including a third outer tube inserted into/withdrawn from the third inner diameter of the cover, an upper cap covering the third outer tube, a third inner tube formed to extend downward to have a first inner diameter portion having a corresponding size to apply for hold and press from the top the second inflow tube of the eco pump at a center of the bottom surface of the upper cap, a second inner diameter portion having a corresponding size so that the second upper tube of the fourth cylinder member may be closely inserted, and a third inner diameter portion having a corresponding size to hold the second inflow tube of the eco pump and press the top, and a discharge path formed between a lower surface extending from on one side of the top of the third inner tube and the upper cap.

2. The cosmetic container using an eco pump of claim 1, wherein the deformable portion includes
a deformable groove portion and a deformable projection portion are alternately disposed on a circumference of the bottom of the bending portion, and
a support portion extending downward from the bottoms of the deformable groove portion and the deformable projection portion, and
the deformable groove portion is formed in an inverted triangular shape and the deformable projection portion is formed in a triangular shape.

3. The cosmetic container using an eco pump of claim 2, wherein a top vertex of the deformable projection portion extends up to an outer surface of the second outflow tube.

4. The cosmetic container using an eco pump of claim 2, wherein the support portion has an inclination portion in which an inner circumference becomes thicker downward.

5. The cosmetic container using an eco pump of claim 2, wherein in the deformable portion, the bending portion and the deformable groove portion have the same thickness as t1, and
a thickness t2 of the deformable projection portion is at most twice larger than the t1.

6. The cosmetic container using an eco pump of claim 1, wherein in the first cylinder member, the first inflow tube is inserted into the first inner tube of the second cylinder member and the penetration hole deviates from the first inner tube and is exposed to the inside of the first upper tube when the first inner tube is sealed and the first inflow tube moves downward.
